# EUROPEAN PATENT SPECIFICATION

(11) **EP 0 684 179 B1**
(45) Date of publication and mention of the grant of the patent: **02.12.1998**
(21) Application number: 95108130.6
(22) Date of filing: 26.05.1995
(51) Int. Cl.: B62D 43/00

(54) **A support assembly for a spare wheel of a vehicle**
Tragkonstruktion für das Reserverad eines Fahrzeugs
Structure support de la roue de secours d'un véhicule

(30) Priority: 27.05.1994 IT TO940441
(43) Date of publication of application: 29.11.1995
(73) Proprietor: IVECO FIAT S.p.A., 10156 Torino (IT)
(72) Inventor: Tonello, Massimo, I-10072 Caselle (IT); Pellino, Antonio, I-28066 Galliate (IT)
(74) Representative: Franzolin, Luigi

(56) References cited:
- EP-A- 0 114 147
- EP-A- 0 443 128
- DE-A- 3 118 504
- DE-C- 912 664
- GB-A- 682 802
- GB-A- 1 091 251

## Description

The present invention relates to a support assembly for a spare wheel of a vehicle, in particular of a bus or coach.

Support assemblies for a spare wheel are known which substantially comprise a pair of guides fixed to a frame of the vehicle inside a compartment for accommodating the spare wheel and a support trolley for the spare wheel, which can slide along the guides between a rest position, in which it is accommodated concealed in the compartment, and a removal position in which it can be removed from the guides; once it has been removed, the trolley can be used to convey the spare wheel, which is of considerable weight, to the location of the wheel change.

Support assemblies for a spare wheel of the type briefly described above have a number of disadvantages.

If the compartment for accommodating the spare wheel is situated in the front region of the vehicle, the support assembly for the wheel itself has to be mounted in a relatively high position with respect to the roadway; the reason for this is that, in accordance with current regulations, the dimensions of the vehicle in the lower front region cannot exceed in a downward direction a limit plane which originates from the point of contact of the front wheels and which is inclined forwards and upwards at a predetermined angle of amplitude, equal to 7°, for example.

As a result of the raised position of the guides, when the trolley is caused to slide into the removal position it is still situated at a considerable height in relation to the roadway; accordingly, the operator has to bear the weight of the trolley and the wheel (in the case of a commercial vehicle it may exceed 100 kg) until the trolley itself is supported on the roadway.

It is obvious that not everyone is capable of such an effort and, therefore, the operation of changing the wheel may be extremely arduous and may involve the risk of injury.

The operation of replacing the trolley is even more difficult, in which case it is necessary to lift the trolley itself from the ground and, while supporting its weight, connect it to the guides with precise movements.

DE-C-912 664 discloses a support assembly according to the features of the preamble of claim 1. Such a support assembly includes a trolley which is supported along guides by its rear wheels; removal of the trolley from the guides requires that the guides are lowered substantially to the ground, and re-assembly of the trolley on the guides still requires manual effort.

GB-A-682 802 discloses a similar support assembly; however, the trolley cannot be removed from the guides completely and cannot be used to carry the wheel.

The object of the present invention is to device a support assembly for a spare wheel of a vehicle, which makes it possible to obviate the disadvantages associated with the above-mentioned known assemblies.

This object is achieved by a support assembly for a spare wheel of a vehicle according to claim 1.

With a view to a better understanding of the present invention a preferred embodiment will be described non-restrictively by way of example below, with reference to the accompanying drawings, in which:
Figure 1 is a view in side elevation of a support assembly for a spare wheel, in a first operative position;
Figure 2 is a partial plan view from above of the support assembly in Figure 1;
Figure 3 is a view in side elevation of the support assembly of Figure 1, in a second operative position;
Figure 4 is a view in front elevation of the support assembly in the position in Figure 3;
Figure 5 is a view in side elevation of the support assembly in Figure 1, in a third operative position;
Figure 6 is a view in side elevation of the support assembly in Figure 1, in a fourth operative position;
Figures 7 and 8 are partial views, respectively in side elevation and in plan, of a detail of the support group in Figure, according to variant of embodiment of the present invention.

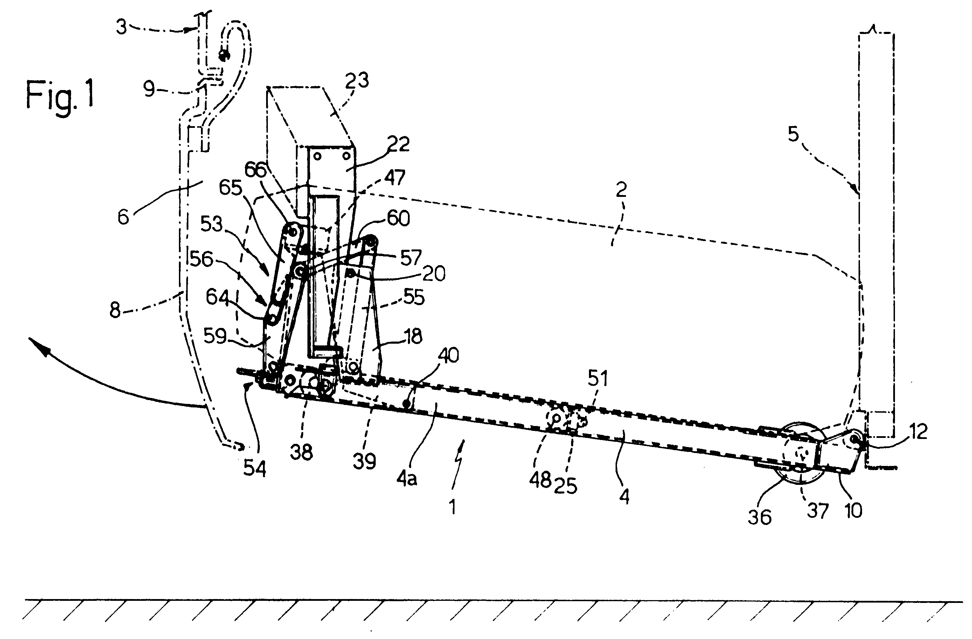

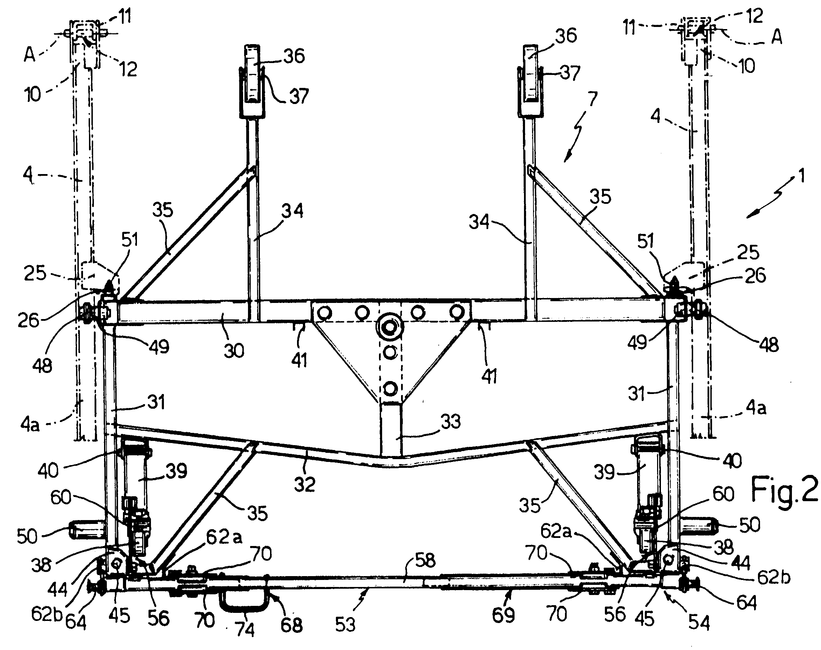

Referring now to Figures 1 and 2, the reference numeral 1 generally denotes a support assembly for a spare wheel 2 of a motor vehicle 3, in particular a bus or coach, part of a lower front region of which is illustrated in Figure 1.

The assembly 1 substantially comprises a pair of lateral bars 4 connected to a frame 5 of the vehicle, inside a lower front compartment 6 of the vehicle itself designed to accommodate the spare wheel 2, in operation, a wheel-holder trolley 7 which is movable along respective guides 4a defined by the bars 4. The compartment 6 is bounded at the front by a front bumper 8 of the vehicle, which is hinged to the frame 5 in the vicinity of an upper edge thereof so that it can be swung upwards to allow access to the compartment 6 (Figure 1).

The bars 4 are arranged side by side in a substantially longitudinal direction with respect to the vehicle and at their rear ends 10 they are connected to respective supports 11 attached to the frame 5 by means of respective hinges 12 which have a common axis A (Figure 2) which is disposed horizontally and transversely with respect to the vehicle.

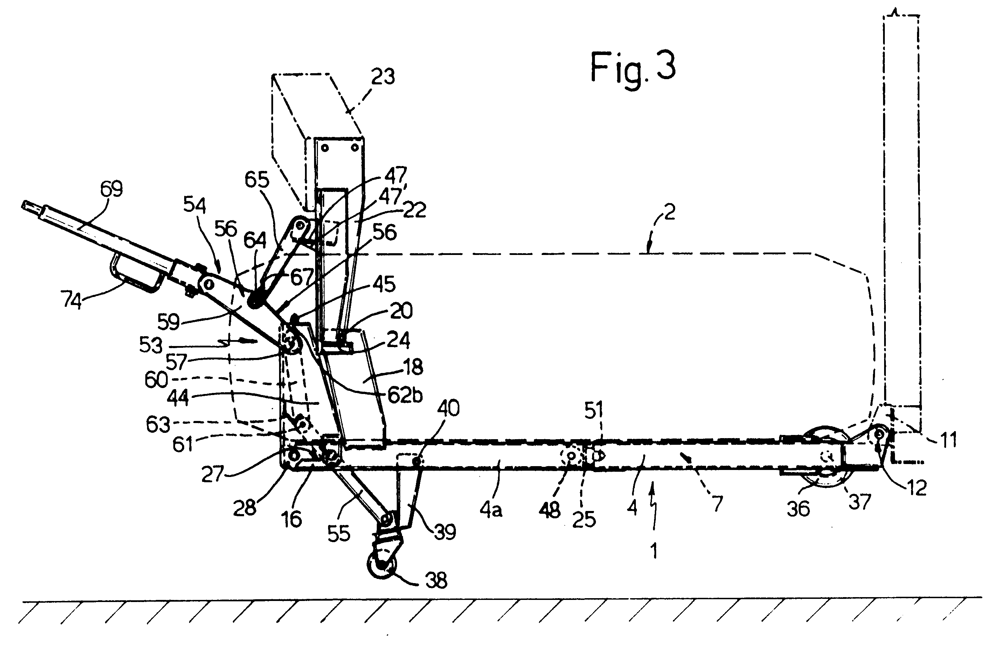

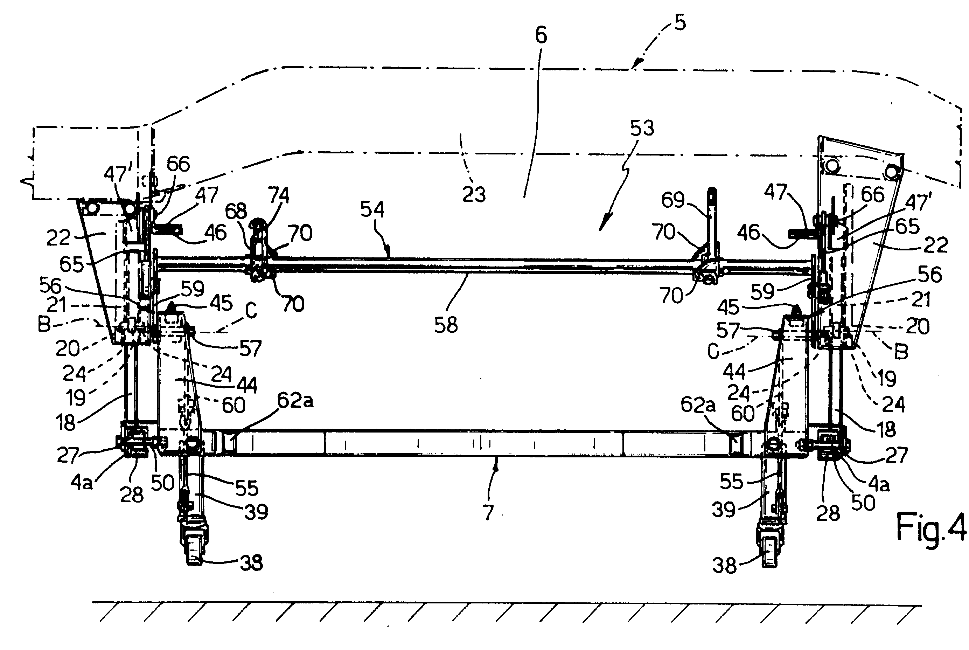

As is clearly evident in Figures 3 and 4, a respective upright 18, projecting substantially upwards, is secured to the front end 16 of each bar 4; each upright 18 has in the vicinity of its upper end a slide 19 (Figure 4) projecting to the front, and a pair of lateral pins 20 having a transverse axis B with respect to the vehicle.

The slides 19 can slide and are guided laterally inside respective guides 21 provided on respective fixed, vertical uprights 22 which are rigidly connected to a cross member 23 forming part of the frame 5; in the vicinity of the lower ends said uprights 22 are provided with brackets 24 designed to co-operate with the pins 20 so as to determine a lower stop position for the bars 4 (Figure 3).

The guides 4a are formed by respective front portions of the bars 4 situated between the front ends 16 of respective stop members 25 welded to an intermediate zone of the bars themselves (Figure 2). Each member 25 has a centering hole 26, the axis of which is parallel to the guides 4a and the purpose of which will be explained below.

The guides 4a are of C-shaped section, with the respective concavities facing one another; at their front ends 16 said guides have respective lateral recesses 27 and respective lower tabs 28 which are slightly bent upwards bent and the purpose of which will be explained below.

The trolley 7 comprises a plurality of bars which are welded to one another so as form a substantially flat structure 29. More particularly, the trolley 7 comprises (Figure 2) a central cross member 30, a pair of front lateral bars 31 which extend forward from the opposite ends of the cross member 30, a shaped front cross member 32 which connects respective intermediate portions of the bars 31, a central beam 33 which connects respective central portions of the cross members 30 and 32, and a pair of rear bars 34 extending rearwards parallel to one another from intermediate lateral portions of the cross member 30.

The trolley 7 also comprises a plurality of further structural members 35 which interconnect the above-described main members in a conventional so as to ensure that the trolley itself has sufficient structural strength.

In a symmetrical position with respect to a longitudinal centre line of the trolley 7, two pegs 41 are welded to the cross member 30 and designed to engage in respective locating holes provided in the wheel disc (not shown) so as to determine the position of the wheel 2 on the trolley 7.

The trolley 7 is provided with a pair of rear wheels 36 which can rotate about respective pins 37 attached to the free ends of the rear bars 34.

The trolley 7 also comprises a pair of front pivoting wheels 38 which are mounted on the ends of respective arms 39 hinged about respective transverse pins 40 fixed to the cross member 32 in the vicinity of the lateral bars 31; the arms 39 are movable between a retracted position, in which they are accommodated substantially within the dimensions of the structure 29 of the trolley 7, and an extended position in which they project downwards so as to enable the wheels 38 to bear on the ground.

Respective uprights 44, from the upper ends of which project respective conical centering pins 45, are rigidly secured to the front ends of the lateral bars 31 so as to protrude therefrom. Said pins 45 are designed to co-operate with centering holes 46 provided in respective brackets 47 welded to the fixed uprights 22 and intended to co-operate with the upper ends of the uprights 44 so as to determine an upper stop position for the trolley 7 itself and, therefore, as will be explained in more detail below, for the bars 4.

For the purpose of co-operating with the guides 4a, the trolley 7 is provided with a pair of intermediate lateral rollers 48 which are rotatable about respective pins 49 (Figure 2) mounted in the vicinity of the opposite ends of the cross member 30; the trolley 7 is also provided with a pair of front lateral pegs 50 which extend laterally from the front ends of the bars 41 and which are designed to cooperate, in use, with the recesses 27 in the guides 4a.

Finally, the trolley 7 comprises a pair of centering pins 51 secured to the rear ends of the lateral bars 31 and designed to co-operate with the holes 26 in the stop members 25 of the bars 4.

Lastly, the support assembly 1 comprises an actuating device 53.

The device 53 essentially comprises a control linkage 54 carried by the uprights 44 of the trolley 7 and a pair of transmission rods 55 connecting the linkage 54 to the arms 39 of the wheels 38.

More precisely, the linkage 54 comprises two levers 56 hinged to respective uprights 44 of the trolley 7, in the vicinity of the upper end thereof, about a transverse horizontal axis C defined by respective pivot pins 57 and by a transverse bar 58 rigidly connecting the levers 56 (Figures 2 and 4).

Each lever 56 comprises, in turn, a front arm 59 and a rear arm 60 extending on opposite sides of the respective upright 44, respectively on the outside and on the inside, which are inclined with respect to one another so as to form an obtuse angle and which are attached to the respective pin 57 which angularly connects respective ends thereof.

The transverse bar 58 is rigidly connected to the free ends of the front arms 59; the free ends of the arms 60 of the levers 50 [sic] are hinged by means of pins 61 to the respective transmission rods 55 which, in turn, have their own opposite ends hinged to the arms 39 in the vicinity of the wheels 38. The linkage 54 is movable between a rest position (Figures 1 and 2), in which the front arms 59 are turned substantially downwards from respective pins 57 and the bar 58 co-operates with a pair of stop brackets 62a welded at the front to the structure of the trolley 7, and an operative position turned forwards and upwards (Figure 3), in which the arms 59 are inclined forwards and upwards to co-operate with respective stop brackets 62b welded to the uprights 44; in this position, the transmission rods 55 co-operate at the tip, with their ends connected to the arms 60, against respective stop brackets 63 welded to respective uprights 44.

On their outside the front arms 59 of the levers 56 are provided with respective pins 64. Each pin 64 is designed to co-operate with a respective suspension hook 65 which is rotatable about a pin 66 mounted between the bracket 47 and a further bracket 47' carried by the respective fixed upright 22. At one of their ends situated opposite the pin 66 the hooks 65 form a semicylindrical support seating 67 for the respective pin 64 and are mounted opposite one another (Figure 4) so that one of the seatings 67 is open at the front and the other at the rear.

Finally, the control linkage 54 comprises two grip bars 68, 69 which are hinged on the transverse bar 58 and are movable between a retracted position, in which they are disposed substantially along the bar itself, and an removal position, in which they extend transversely with respect to the bar 58 itself (downwards in the rest position of the assembly 1 shown in Figures 1 and 2). In the portion in which they are connected to the rod 58 the bars 68, 69 have a pair of plates 70 (Figures 3 and 4) which are parallel to one another, are disposed on opposite sides of the bar 58 and are spaced apart from the latter; said plates 70 are designed to embrace the stop brackets 62a of the bar 58, when the latter is situated in the rest position and the bars 68, 69 in the retracted position (Figure 2), but are shaped so as to be disengaged from said brackets when the bars 68, 69 are turned into the extended position.

The bar 68 is of shorter length than the bar 69 and is provided with a grip handle 74. These bars are suitably associated with locking members in the retracted position on the bar 58; said members, which are of conventional type and are not shown, may comprise, for example, rubber blocks provided with a catch seating designed to be engaged with a snap fit by the bars 68, 69.

The mode of operation of the support assembly 1 will be described below, starting from the rest condition shown in Figures 1 and 2.

In the aforementioned condition, the trolley 7 is mounted on the guides 4a and is fully inserted in contact with the stop members 25 so that the pins 51 engage in the centering holes 26. The lateral pegs 50 of the trolley 7 are accommodated in the respective recesses 27 of the guides 4a; the trolley 7 and the bars 4 are thus secured together both transversely and vertically.

The bars 4 and the trolley 7 are locked in a raised position, with the uprights 44 disposed in contact with the respective brackets 47 and the pins 45 accommodated in the respective centering holes 46; the pins 64 are engaged by the respective hooks 65 and the control linkage 54 is in the lowered rest position, with the bars 68, 69 in a retracted position so as to lock the bar 58 on the stop brackets 62a.

In the condition described, the support assembly 1 the spare wheel 2 carried by the trolley 7 are accommodated concealed in the compartment 6 of the vehicle.

The removal of the spare wheel takes place as follows. Firstly, the bars 68, 69 are released and turned downwards. In this way, since the connection formed by the bars themselves on the brackets 62a is released, the assembly 1 tends to move under gravity into the position shown in Figure 3, in which the pins 20 carried by the uprights 18 of the bars co-operate with the stop brackets 24 of the fixed uprights 22.

During the downward movement of the assembly 1, the reaction of the hooks 65 on the respective pins 64 induces the control linkage 54 to be raised; in particular, the raising of the arms 59 of the levers 56 induces a downward thrust effect by the arms 60 on the rods 55 and, therefore, on the arms 39 of the wheels 38 which are brought into the extended position.

The device 53 stops in the position shown in Figure 3 as a result of the arms 59 coming into contact with the stop brackets 62b.

To prevent violent impacts caused by the substantial weight of the wheel 2, during this phase the downward movement of the trolley should be followed manually by holding the bars 68, 69.

The trolley can be freed from the hooks 65 once the position in Figure 3 has been reached; since these hooks are opposed it is only necessary to lift the trolley 7 slightly and manually remove the hook 65 which engages the respective pin 64 from above; the other hook 65 is automatically released by gravity as soon as it loses contact with the respective pin 64, as result of said slight raising action.

The trolley is now free to slide longitudinally on the guides 4.

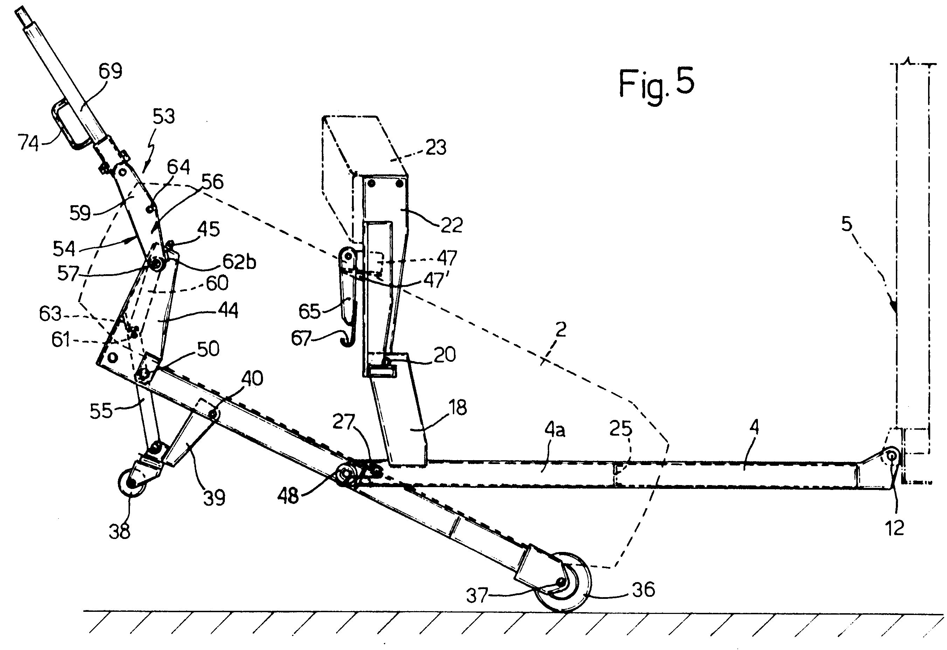

In particular, it can be removed until the lateral rollers 48 come into contact with the tabs 28 disposed at the front ends 16 of the guides themselves (Figure 5). By raising the front part of the trolley 7, which rotates about pivots defined by the rollers 48, the rear wheels 36 come into contact with the ground.

At this point, to remove the trolley 7 entirely from the guides 4 it is merely necessary to raise the front part slightly by acting appropriately on the bar 69 in such a way that the rollers 48 overcome the stop members formed by the tabs 28.

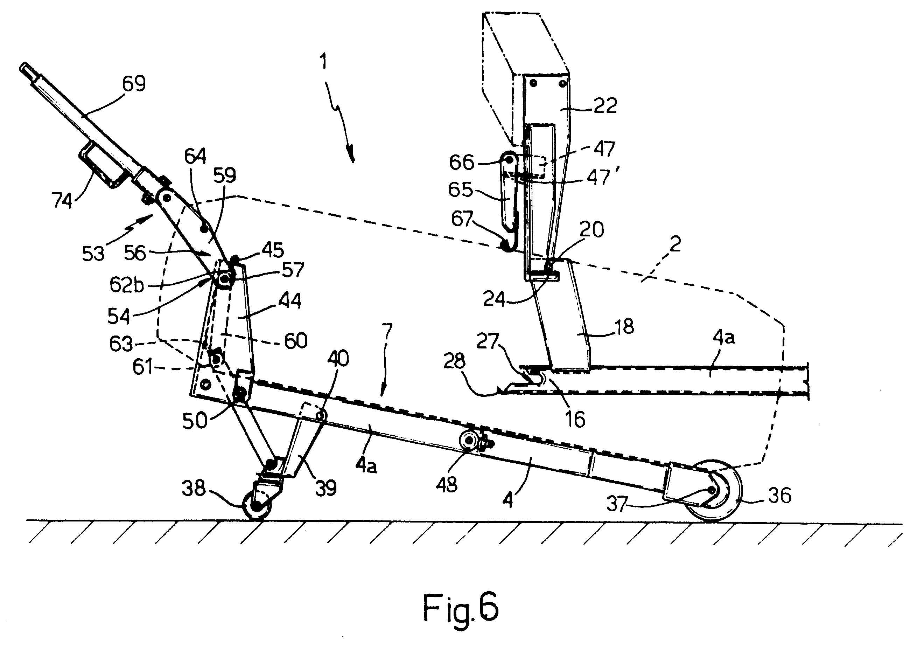

The front wheels 38 of the trolley 7 can thus be rested on the ground (Figure 6) and the trolley 7 can be moved freely, guided by means of the bar 69, until it reaches the location of the wheel change.

Finally, the trolley can be raised by being pivoted about the rear wheels 36 so that the wheel 2 is disposed in a vertical position resting on the ground; the trolley 7 can thus be easily separated from the wheel by withdrawing the pegs 41 axially therefrom.

The mounting of the trolley 7 on the vehicle takes place substantially by repeating in reverse order the above-described sequence of operations.

In particular, the trolley 7 provided with the changed wheel or a new spare wheel 2 is caused to slide along the roadway until it is situated facing the compartment 6, with the lateral rollers 48 in alignment with the guides 4a (Figure 6).

Subsequently, the trolley 7 is raised at the front, by acting on the bars 68 and 69 or on the transverse bar 58 and pivoting about the rear wheels 36 so that the rollers 48 are supported in the front ends 16 of the guides 4a (Figure 5).

Since the centre of gravity of the trolley-wheel assembly is displaced to the front with respect to the rollers 48, the trolley 7 tends to rotate under its own weight about the rollers themselves in such a way the rear wheels 36 are lifted from the ground; this movement has to be controlled by hand so as to maintain the trolley 7 substantially in the plane of the guides 4a.

The trolley 7 can be pushed by hand so as to bring it into contact with the stop members 25; the pins 51 engage in respective centering holes 26 and assure the correct positioning of the trolley 7 in a lateral direction.

At the same time, the front lateral pegs 50 of the trolley 7 engage in the recesses 27 of the guides 4a; the trolley 7 is thus at the end of travel and can be locked by engaging the pins 64 by means of the hooks 65 (Figure 3). As a result of the engagement of the pins 51 and the pegs 50 the trolley 7 is secured to the bars 4 (Figure 3) in transverse and vertical directions.

If the control linkage 54 is now lowered, by acting on the bar 69, there is brought about a rotation of the arms 60 of the levers 56, which arms are pivoted about hooks 65 as a result of the pivots 64. This action comprises the rotation about the hinges 12 and, therefore, the raising of the assembly formed by the bars 4 and the trolley 7 towards the rest position under the thrust transmitted to the trolley 7 by the pins 57; at the same time, the arms 60 of the levers 56, attached to the arms 59, exert a pulling force on the transmission rods 55 which lift the arms 39 into the retracted position (Figure 1).

Finally, the assembly 1 can be locked in the rest position described by returning the bars 68, 69 into the retracted position, in which they co-operate with the stop brackets 62a and thus prevent any movement of the actuating device 53.

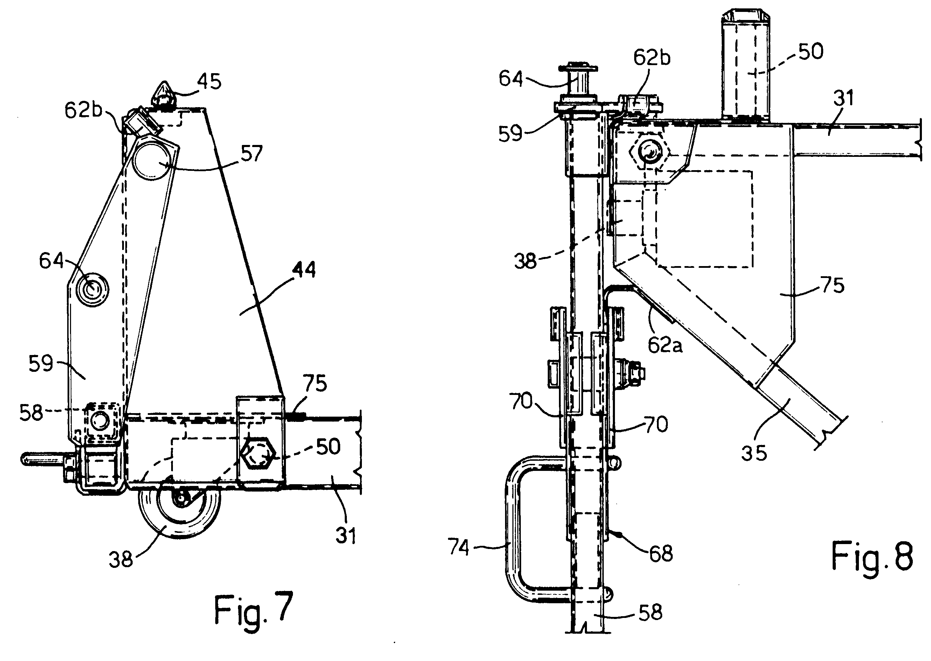

Figures 7 and 8 illustrate a simplified variant of the trolley 7, in which the front wheels 38 are not mounted on movable arms but are attached rigidly to the structure of the trolley 7 by means of respective support plates 75 welded to the structure of the trolley 7. In this case the actuating device 53 is simplified, in particular the arms 60 and the transmission rods 55 being omitted, and it only controls the displacement of the assembly 1 from the raised rest position into the lowered position for removal from the trolley. The mode of operation is entirely analogous to that described in the foregoing but, upon removal of the trolley 7 from the guides 4a, the operator has to follow the lowering of the front part of the trolley to the ground over a greater distance.

The advantages achieved with the present invention are apparent from a study of the support assembly 1 designed in accordance with therewith.

In particular, although the assembly 1 is raised to an adequate height, in operation, with respect to the roadway, the removal of the trolley 7 and the associated replacement in the vehicle are carried out easily, without requiring substantial effort by the operator.

## Claims

1. A support assembly (1) for a spare wheel (2) of a vehicle (3), in particular a commercial vehicle, of the type comprising:
- a trolley (7) designed to carry said spare wheel (2) and designed to be accommodated in a compartment (6) of said vehicle (3) in such a way that it can be removed therefrom,
- guide means (4,4a) for said trolley (7) designed to be connected to a frame (5) of said vehicle (3) and including a pair of lateral guides (4a) defined by bars (4),
said trolley (7) being movable along said guide means (4, 4a) between a rest position inside said compartment (6) and a removal position in which it can be removed from said guide means (4, 4a),
said guide means being movable between a raised position, in which the trolley (7) is locked in said rest position, and a lowered position, in which the trolley (7) can be caused to slide along said guide means (4, 4a) from and towards said removal position,
said trolley (7) including front grip means (68, 69) and at least a pair of rear wheels (36),
characterised in that said trolley is provided with a pair of lateral intermediate rollers (48) designed to slide along said guides (4a) and engagement means (50, 51) designed to co-operate with respective locating means (27, 25) of said guides (4a) in said rest position of said trolley (7), for locking said trolley (7) at least transversely and vertically with respect to said guides (4a).

2. An assembly according to claim 1, characterised in that it comprises means (12) for the hinge-type connection of said guide means (4, 4a) to said frame (5).

3. An assembly according to claim 1 or 2, characterised in that it comprises actuating means (53) for displacing said guide means (4, 4a) from said raised position into said lowered position, and vice versa.

4. An assembly according to claim 3, characterised in that said actuating means (53) comprises a control linkage (54) carried by said trolley (7) and means (65) for connecting said linkage (54) to said frame (5) of said vehicle (3).

5. An assembly according to any one of the preceding claims, characterised in that said trolley (7) comprises a pair of rear wheels (36) and at least one pivoting front wheel (38).

6. An assembly according to claim 5, characterised in that said front wheel (38) is mounted on an arm (39) which is movable between a retracted position, in which it is accommodated substantially within the dimensions of the trolley (7), and an extended position in which it projects downwards; said actuating means (53) comprising transmission means (55) interposed between said linkage (54) and said movable arm (39) for moving the latter from said retracted position into said extended position when said guide means (4, 4a) are brought from said raised position into said lowered position, and vice versa.

7. An assembly according to any one of claims 4 to 6, characterised in that said linkage (54) comprises at least one lever (56) pivoted on said trolley (7) and provided with a pin (64), said connecting means for said linkage (54) comprising at least one suspension hook (65) pivoted on a member (22) attached to said frame (23, 5) and designed to co-operate with said pin (64).

8. An assembly according to claim 7, characterised in that the linkage (54) comprises a pair of levers (56) pivoted on opposite sides of said trolley (7) and provided with respective pins (64), and a transverse bar (58) rigidly connected to said levers (56); said connecting means for said linkage (54) comprising a pair of suspension hooks (65) designed to co-operate with respective pins (64) of said levers (56) and mounted opposed in such a way as to be disengaged from said pins (64) rotating in opposite directions.

9. An assembly according to claim 8, characterised in that said trolley (7) comprises a pair of front wheels (38) mounted on respective movable arms (39); said levers (56) comprising a first arm (59) connected to said transverse bar (58) and provided with said pin (64), and a second arm (60) rigidly connected to said first arm (59); said transmission means comprising a pair of rods (55) each having one end pivoted on said second arm (60) of a respective lever (56) and one end pivoted on said movable arm (39) of a respective front wheel (38).

10. An assembly according to any one of claims 4 to 9, characterised in that it comprises releasable means (68, 69; 62a) for locking said linkage (54) with respect to trolley

11. An assembly according to claim 10, depending on claim 8 or 9, characterised in that said releasable locking means comprise at least one member (68, 69) movably fastened to said transverse bar (58) and provided with means (70) engagement with a corresponding member (62a) fastened to said trolley (7).

## Patentansprüche

1. Halterung (1) für ein Reserverad (2) eines Fahrzeuges (3), insbesondere eines gewerblich eingesetzten Fahrzeuges, der Art, die umfaßt,
- einen Wagen (7), der zum Tragen des Reserverades (2) ausgestaltet ist und ausgestaltet ist, um in einem Fach (6) des Fahrzeugs (3) derart aufgenommen zu werden, daß er hieraus entnommen werden kann,
- Führungsmittel (4, 4a) für den Wagen (7), die ausgestaltet sind, um mit einem Rahmen (5) des Fahrzeuges (3) verbunden zu werden, und die ein Paar durch Stangen (4) definierte, seitliche Führungen (4a) beinhalten, wobei der Wagen (7) entlang der Führungsmittel (4, 4a) zwischen einer in dem Fach (6) befindlichen Ruhestellung und einer Entnahmestellung, in der er aus den Führungsmitteln (4, 4a) herausgenommen werden kann, bewegbar ist,
wobei die Führungsmittel zwischen einer angehobenen Position, in der der Wagen (7) in der Ruhestellung verriegelt ist, und einer abgesenkten Position, in der der Wagen (7) entlang der Führungsmittel (4, 4a) aus der Entnahmestellung und in diese verschoben werden kann, bewegbar sind, wobei der Wagen (7) vordere Greifmittel (68, 69) und zumindest ein Paar Hinterräder (36) beinhaltet,
**dadurch gekennzeichnet, daß** der Wagen mit einem Paar seitlicher Zwischenrollen (48), die entlang der Führungen (4a) verschiebbar sind, und mit Eingriffsmitteln (50, 51) ausgestattet ist, die in der Ruhestellung des Wagens (7) mit jeweiligen Plazierungsmitteln (27, 25) der Führungen (4a) zusammenwirken, um den Wagen (7) zumindest quer und senkrecht zu den Führungen (4a) zu sperren.

2. Halterung nach Anspruch 1, **dadurch gekennzeichnet, daß** sie Mittel (12) für die gelenkige Verbindung der Führungsmittel (4, 4a) mit dem Rahmen (5) umfaßt.

3. Halterung nach Anspruch 1 oder 2, **dadurch gekennzeichnet, daß** sie Betätigungsmittel (53) zum Verschieben der Führungsmittel (4, 4a) von der angehobenen Stellung in die abgesenkte Stellung und umgekehrt umfaßt.

4. Halterung nach Anspruch 3, **dadurch gekennzeichnet, daß** das Betätigungsmittel (53) eine vom Wagen (7) getragene Steuerverbindung (54) und Mittel (65) zum Verbinden der Steuerverbindung (54) mit dem Rahmen (5) des Fahrzeuges (3) umfaßt.

5. Halterung nach einem der vorhergehenden Ansprüche, **dadurch gekennzeichnet, daß** der Wagen (7) ein Paar Hinterräder (36) und zumindest ein sich drehendes Vorderrad (38) umfaßt.

6. Halterung nach Anspruch 5, **dadurch gekennzeichnet, daß** das Vorderrad (38) an einem Arm (39) angebracht ist, der zwischen einer eingezogenen Stellung, in der er im wesentlichen in den Abmessungen des Wagens (7) untergebracht ist, und einer ausgefahrenen Stellung, in der er nach unten vorsteht, bewegbar ist, wobei das Betätigungsmittel (52) ein Übertragungsmittel (55) umfaßt, das zwischen der Verbindung (54) und dem bewegbaren Arm (39) angeordnet ist, um den letzten von der eingezogenen Stellung in die ausgefahrene Stellung zu bewegen, wenn die Führungsmittel (4, 4a) von der angehobenen Stellung in die abgesenkte Stellung und umgekehrt gebracht werden.

7. Halterung nach einem der Ansprüche 4 bis 6, **dadurch gekennzeichnet, daß** die Verbindung (54) zumindest einen an dem Wagen (7) drehbar angebrachten Hebel (56) umfaßt und mit einem Zapfen (64) versehen ist, wobei das Verbindungsmittel für die Verbindung (54) zumindest einen Aufhängehaken (65) umfaßt, der an einem an dem Rahmen (23, 5) angebrachten Element (22) drehbar angebracht ist und zum Zusammenwirken mit dem Zapfen (64) ausgestaltet ist.

8. Halterung nach Anspruch 7, **dadurch gekennzeichnet, daß** die Verbindung (55) auf gegenüberliegenden Seiten des Wagens (7) drehbar angebrachte und mit jeweiligen Zapfen (64) versehene Hebel (56) und eine Querstange (58) umfaßt, die mit den Hebeln (56) starr verbunden ist, wobei das Verbindungsmittel für die Verbindung (54) ein Paar Aufhängehaken (65) umfaßt, die ausgestaltet sind, um mit den jeweiligen Zapfen (64) der Hebel (56) zusammenzuwirken und dergestalt gegenüberliegend angebracht sind, daß sie von den Zapfen (64) in entgegengesetzten Richtungen drehend außer Eingriff zu bringen sind.

9. Halterung nach Anspruch 8, **dadurch gekennzeichnet, daß** der Wagen (7) ein Paar Vorderräder (38) umfaßt, die an jeweiligen bewegbaren Armen (39) angebracht sind, wobei die Hebel (56) einen ersten Arm (59), der mit der Querstange (58) verbunden ist und mit dem Zapfen (64) versehen ist, und einen zweiten Arm (62), der mit dem ersten Arm (59) starr verbunden ist, umfassen, wobei das Übertragungsmittel ein Paar Stangen (55) umfaßt, wovon jede ein Ende hat, das an dem zweiten Arm (60) des jeweiligen Hebels (56) drehbar gelagert ist und ein Ende hat, das an dem bewegbaren Arm (39) eines jeweiligen Vorderrades (38) drehbar angebracht ist.

10. Halterung nach einem der Ansprüche 4 bis 9, **dadurch gekennzeichnet, daß** sie lösbare Mittel (68, 69; 62a) zum Verriegeln der Verbindung (54) gegenüber dem Wagen (7) umfaßt.

11. Halterung nach Anspruch 10 in Abhängigkeit von Anspruch 8 oder 9, **dadurch gekennzeichnet, daß** die lösbaren Verriegelungsmittel zumindest ein Element (68, 69) umfassen, das an der Querstange (58) bewegbar befestigt ist und mit Mitteln (70) versehen ist, die mit einem entsprechenden Element (62), das an dem Wagen (7) angebracht ist, in Eingriff gelangen.

## Revendications

1. Ensemble de support (1) pour une roue de secours (2) d'un véhicule (3), en particulier un véhicule commercial, du type comportant
- un chariot (7) conçu pour porter ladite roue de secours (2) et conçu pour être logé dans un compartiment (6) dudit véhicule (3) d'une manière telle qu'il peut en être enlevé,
- des moyens de guidage (4, 4a) pour ledit chariot (7) conçus afin d'être reliés à un châssis (5) dudit véhicule (3) et comprenant une paire de guides latéraux (4a) définis par des barres (4), ledit chariot (7) étant mobile le long desdits moyens de guidage (4, 4a) entre une position de repos à l'intérieur dudit compartiment (6) et une position de retrait dans laquelle il peut être enlevé desdits moyens de guidage (4, 4a),
lesdits moyens de guidage étant mobiles entre une position relevée, dans laquelle le chariot (7) est bloqué dans ladite position de repos, et une position abaissée, dans laquelle le chariot (7) peut être amené à coulisser le long desdits moyens de guidage (4, 4a) depuis et vers ladite position de retrait,
ledit chariot (7) comprenant des moyens de saisie avant (68, 69) et au moins une paire de roues arrière (36), caractérisé en ce que ledit chariot est pourvu d'une paire de galets intermédiaires latéraux (48) conçus pour coulisser le long desdits moyens de guidage (4a) et des moyens de prise (50, 51) conçus pour coopérer avec des moyens de positionnement respectifs (27, 25) desdits moyens de guidage (4a) dans ladite position de repos dudit chariot (7), afin de bloquer ledit chariot (7) au moins transversalement et verticalement par rapport auxdits moyens de guidage (4a).

2. Ensemble selon la revendication 1, caractérisé en ce qu'il comprend des moyens (12) pour la liaison du type articulation desdits moyens de guidage (4, 4a) sur ledit châssis (5).

3. Ensemble selon la revendication 1 ou 2, caractérisé en ce qu'il comprend des moyens d'actionnement (53) destinés à déplacer lesdits moyens de guidage (4, 4a) depuis ladite position relevée dans ladite position abaissée, et vice-versa.

4. Ensemble selon la revendication 3, caractérisé en ce que lesdits moyens d'actionnement (53) comprennent une bielle de commande (54) portée par ledit chariot (7) et des moyens (65) destinés à relier ladite bielle (54) audit châssis (5) dudit véhicule (3).

5. Ensemble selon l'une quelconque des revendications précédentes, caractérisé en ce que ledit chariot (7) comporte une paire de roues arrière (36) et au moins une roue avant pivotante (38).

6. Ensemble selon la revendication 5, caractérisé en ce que ladite roue avant (38) est montée sur un bras (39) qui est mobile entre une position rétractée, dans laquelle il est logé sensiblement dans les dimensions du chariot (7), et une position déployée dans laquelle il fait saillie vers le bas, lesdits moyens d'actionnement (53) comportant des moyens de transmission (55) interposés entre ladite bielle (54) et ledit bras mobile (39) afin de déplacer ce dernier depuis ladite position rétractée dans ladite position déployée lorsque lesdits moyens de guidage (4, 4a) sont amenés de ladite position relevée dans ladite position abaissée, et vice versa.

7. Ensemble selon l'une quelconque des revendications 4 à 6, caractérisé en ce que ladite bielle (54) comporte au moins un levier (56) articulé sur ledit chariot (7) et pourvu d'un axe (64), lesdits moyens de liaison pour ladite bielle (54) comportant au moins un crochet de suspension (65) articulé sur un élément (22) fixé sur ledit châssis (23, 5) et conçu pour coopérer avec ledit axe (64).

8. Ensemble selon la revendication 7, caractérisé en ce que la bielle (54) comporte une paire de leviers (56) articulés sur des côtés opposés dudit chariot (7) et pourvus d'axes (64) respectifs, et une barre transversale (58) reliée rigidement auxdits leviers (56) ; lesdits moyens de liaison pour ladite bielle (54) comportant une paire de crochets de suspension (65) conçus pour coopérer avec les axes (64) respectifs desdits leviers (56) et montés de façon opposée de manière à être désengagés desdits axes (64) qui tournent dans des directions opposées.

9. Ensemble selon la revendication 8, caractérisé en ce que ledit chariot (7) comporte une paire de roues avant (38) montées sur des bras mobiles (39) respectifs ; lesdits leviers (56) comportant un premier bras (59) relié à ladite barre transversale (58) et pourvu dudit axe (64), et un deuxième bras (60) relié rigidement audit premier bras (59); lesdits moyens de transmission comportant une paire de tiges (55) ayant chacune une extrémité articulée sur ledit deuxième bras (60) d'un levier (56) respectif et une extrémité articulée sur ledit bras mobile (39) d'une roue avant (38) respective.

10. Ensemble selon l'une quelconque des revendications 4 à 9, caractérisé en ce qu'il comporte des moyens libérables (68, 69; 62a) destinés à bloquer ladite bielle (54) par rapport au chariot (7).

11. Ensemble selon la revendication 10, dépendante de la revendication 8 ou 9, caractérisé en ce que lesdits moyens de blocage libérables comportent au moins un élément (68, 69) fixé de façon mobile sur ladite barre transversale (58) et pourvu de moyens (70) de prise avec un élément (62a) correspondant fixé sur ledit chariot (7).
